# EUROPÄISCHE PATENTSCHRIFT

(11) **EP 3 164 790 B1**
(45) Veröffentlichungstag und Bekanntmachung des Hinweises auf die Patenterteilung: **28.03.2018**
(21) Anmeldenummer: 16727951.2
(22) Anmeldetag: 24.05.2016
(51) Int. Cl.: G06F 3/01

(54) **EINGABEVORRICHTUNG ZUR KONTROLLE EINES AVATARS IN EINER RECHNERGENERIERTEN UMGEBUNG SOWIE VERFAHREN ZU DEREN STEUERUNG**
INPUT DEVICE FOR CONTROLLING AN AVATAR IN A COMPUTER-GENERATED ENVIRONMENT, AND A METHOD FOR CONTROLLING SAME
DISPOSITIF DE SAISIE POUR LE CONTRÔLE D'UN AVATAR DANS UN ENVIRONNEMENT GÉNÉRÉ PAR ORDINATEUR ET PROCÉDÉ POUR SA COMMANDE

(30) Priorität: 16.06.2015 DE 102015007728
(43) Veröffentlichungstag der Anmeldung: 10.05.2017
(73) Patentinhaber: pathbender GmbH, 30952 Ronnenberg (DE)
(72) Erfinder: REINEKE, Julia, 30952 Ronnenberg (DE); REINEKE, Tobias, 30952 Ronnenberg (DE)
(86) Internationale Anmeldenummer: PCT/EP2016/000860
(87) Internationale Veröffentlichungsnummer: WO 2016/202425

(56) Entgegenhaltungen:
- JP-K1- 2001 171 815
- Michael Van Den Bergh: "Visual Body Pose Analysis for Human-Computer Interaction", , 31. Dezember 2010 (2010-12-31), Seiten 1-223, XP055291586, Diss. ETH No. 18838 Gefunden im Internet: URL:https://www.semanticscholar.org/paper/ Visual-body-pose-analysis-for-human-comput er-Bergh/739927e173911f5c811f95191ca8a3a03 774e56f/pdf [gefunden am 2016-07-27]
- ALESSANDRO DE LUCA ET AL: "Motion Control of the CyberCarpet Platform", IEEE TRANSACTIONS ON CONTROL SYSTEMS TECHNOLOGY, IEEE SERVICE CENTER, NEW YORK, NY, US, Bd. 21, Nr. 2, 1. März 2013 (2013-03-01), Seiten 410-427, XP011494343, ISSN: 1063-6536, DOI: 10.1109/TCST.2012.2185051
- DE LUCA A ET AL: "Control design and experimental evaluation of the 2D CyberWalk platform", INTELLIGENT ROBOTS AND SYSTEMS, 2009. IROS 2009. IEEE/RSJ INTERNATIONAL CONFERENCE ON, IEEE, PISCATAWAY, NJ, USA, 10. Oktober 2009 (2009-10-10), Seiten 5051-5058, XP031580968, ISBN: 978-1-4244-3803-7

## Beschreibung

Die vorliegende Erfindung betrifft eine Eingabevorrichtung zur Schaffung und Kontrolle eines Avatars in einer rechnergenerierten Umgebung sowie Verfahren zu deren Steuerung.

Als nächstkommenden Stand der Technik offenbart die JP 2001 171815 A (unter anderem) eine Vorrichtung mit einem ortsfesten Förderband und einer darauf drehbar angeordneten Führung mit Rollkörpern, welche die Lauffläche für eine Person bildet. Die gezeigte Vorrichtung ist dabei mit einer zweidimensionalen Positionsregelung ausgestattet. Entfernt sich die Person in beliebiger Richtung von der Sollposition, vorzugsweise der Mitte der Führung, reagiert die Vorrichtung mit einem speziellen Manöver. Dieses Manöver beinhaltet eine Rotation der Führung und/oder eine Transportbewegung des Förderbands und transportiert die Person stets zurück zur Sollposition. Die Kinematik der JP 2001 171815 A (und auch die aller ähnlichen Vorrichtungen) sei an folgenden einfachen Beispielen erläutert. Dreht sich die Person auf der Stelle im Zentrum der Führung, reagiert die Vorrichtung nicht, da der Rotationswinkel der Person für die Positionsregelung nicht von Bedeutung ist. Läuft die Person jedoch quer zur Transportausrichtung des Förderbands, wird sie mittels Rotation der Führung so gedreht, dass Laufrichtung und Transportausrichtung wieder übereinstimmen, und die Person somit vom Förderband zurück ins Zentrum der Führung gefördert werden kann. Diese Art der Regelung ist vorteilhaft, weil sie es der Person ermöglicht, unbegrenzt in jede beliebige Richtung zu laufen. Zugleich ist diese Art der Regelung jedoch unvorteilhaft, da sie die Person beim Laufen quer zur Transportausrichtung des Förderbands, stets auf eine für den Läufer unerwartete Weise rotiert, was bei manchen Personen zu Unwohlsein führt. Im Falle, dass die Vorrichtung nur eine kleine Lauffläche aufweist, muss diese Rotationsreaktion zudem prompt und heftig ausfallen, damit die Person die Lauffläche nicht unbeabsichtigt verlässt.

Der vorliegenden Erfindung liegt die Aufgabe zu Grunde, die Nachteile der JP 2001 171815 A in Bezug auf Komfort zu vermeiden, wie sie insbesondere bei kleinen und sehr wirtschaftlich herstellbaren Laufflächen auftreten, indem sie die Bewegungsfreiheit der Person auf eine Weise einschränkt, die dem Fachmann unsinnig erscheinend mag.

Die Lösung der gestellten Aufgabe wird gemäß der unabhängigen Ansprüche der vorliegenden Erfindung gefunden, indem die zweidimensionale Positionsregelung nach dem Stand der Technik durch eine eindimensionale Positionsregelung in Kombination mit einer Winkelregelung ersetzt wird. Im Gegensatz zum Stand der Technik weist die erfindungsgemäße Vorrichtung damit eine völlig andere Kinematik auf, denn sie reagiert nun unmittelbar auf die Winkelstellung der Person auf der Lauffläche. Mit der erfindungsgemäßen Vorrichtung bleibt es der Person jedoch verwehrt, seitlich zu ihrer Frontalrichtung zu laufen. Damit ist im Gegensatz zum Stand der Technik insbesondere das unbegrenzte seitliche Laufen mittels Sidesteps mit der vorliegenden Erfindung nicht mehr möglich.

Die erfindungsgemäße Eingabevorrichtung verfügt über eine Einrichtung zum Erfassen von Tiefeninformationen und macht sich deren spezielle Eigenschaft zunutze, ebenfalls Farbinformationen zu erfassen, um die Schaffung und Steuerung eines Avatars in der Gestalt des Benutzers auf sehr einfache Weise zu ermöglichen. Die Vorteile des Gegenstands nach Anspruch 1 liegen darin begründet, dass durch die Verwendung einer anderen Regelung das Laufen auf der Vorrichtung, und insbesondere mit kleiner Lauffläche, stets komfortabel möglich ist. Zudem wird es dem Benutzer durch die erfindungsgemäße Vorrichtung ermöglicht, eine virtuelle Welt mit einem authentischen Abbild seines eigenen Körpers zu betreten und dessen Gliedmaßen dabei mittels erfasster Gelenkpunkte vollständig zu kontrollieren.

Der Komfort beim Laufen in der virtuellen Realität wird durch eine weich-elastische Einfassung des Läufers, etwa in Hüfthöhe oder im Bereich der Oberschenkel, noch weiter verbessert. Ebenso ist es vorteilhaft, wenn die erfindungsgemäße Vorrichtung auf Längs- und Querbeschleunigung der Person mit flinken aber feinfühligen Schwenkbewegungen der Lauffläche um horizontale Achsen reagiert und so das instinktive "sich nach hinten lehnen" beim Abbremsen oder das "sich seitlich Neigen" beim Kurvenlaufen kompensiert. Das Schwenken der Lauffläche wird dann ebenfalls für die Simulation von Steigung und Gefälle in der virtuellen Realität genutzt. Die Immersion in der virtuellen Umgebung wird darüber hinaus gesteigert, indem man dem Benutzer einige Gegenstände oder Hindernisse der virtuellen Realität, in der realen Umgebung als Dummy aus der jeweils korrekten Richtung und mit dem passenden Abstand und der passenden Geschwindigkeit zuführt. Zum Beispiel mittels eines automatischen Gelenkarms mit entsprechenden Aufsätzen an dessen Ende.

Die Erfindung wird nachfolgend unter Bezugnahme auf die Zeichnung näher erläutert. Es zeigt

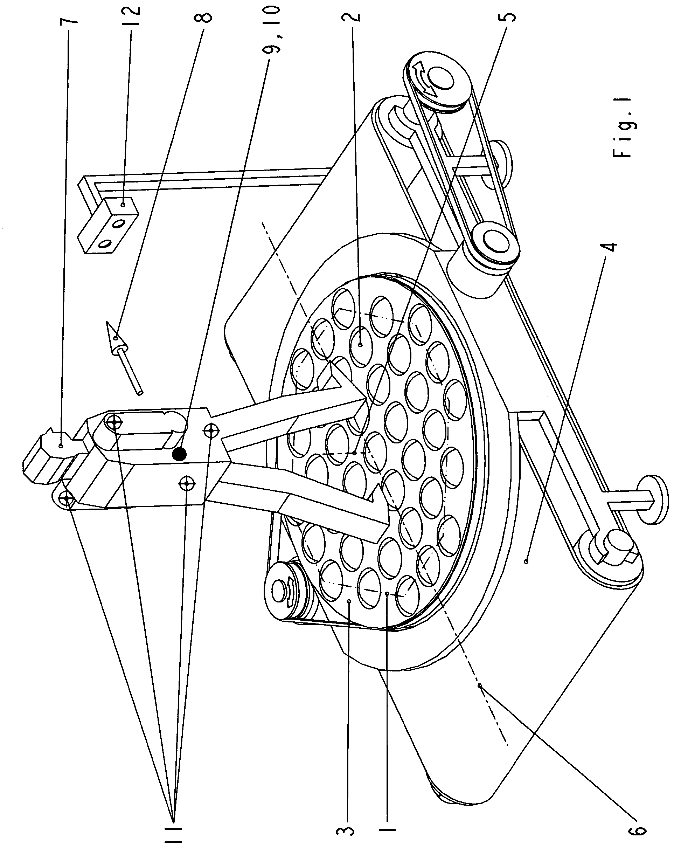

Fig.1 die erfindungsgemäße Eingabevorrichtung mit Förderband, Führung mit Rollkörpern sowie Antrieben und Erfassungseinrichtung in einer stark vereinfachten Darstellung mit einigen der möglichen Gelenkpunkte der Person.

Die Rollkörper (2) stehen aus der Oberseite der Führung (3) hervor und bilden die begehbare Lauffläche (1), auf der eine Person (7) steht oder läuft. Wenn sich die Person (7) im Zentrum der Führung (3) befindet und dort rotiert, führt sie zwar die zur Drehung nötigen Körperbewegungen aus, ohne sich dabei jedoch tatsächlich zu drehen, da die Führung (3) stets und unverzüglich eine Gegendrehung ausführt, welche die Drehung der Person (7) vollständig kompensiert. Die Laufrichtung (8) der Person (7) ist somit im Wesentlichen stets parallel zur Längsmittellinie (6) der Fördereinrichtung (4), und die Person (7) wird beim Laufen mittels einer eindimensionalen Positionsregelung einfach und direkt im Zentrum der Führung (3) eingeregelt. Anstatt heftigen und unerwarteten Reaktionen ausgesetzt zu sein, befindet sich die Person (7) beim Drehen auf der Stelle und beim Laufen geradeaus und in Kurven bezüglich ihrer Position und bezüglich ihrer Winkelausrichtung immer in Ruhe gegenüber der realen Umgebung. Die Winkelstellung der Person (7) wird dabei zum Beispiel aus deren Körperhaltung mittels der Position ihrer Gelenkpunkte (11) errechnet. Die Positionen der einzelnen Gelenkpunkte (11) aller Körperglieder stehen dann vorteilhafter Weise ebenfalls zur Kontrolle des Avatars in der virtuellen Realität zur Verfügung. Besonders vorteilhaft erscheint es dabei, dass die Person (7) während der Kontrolle des Avatars immer dieselbe frontale Ausrichtung zur Erfassungseinrichtung (12) beibehält. Für eine möglichst authentische Gestaltung des Avatars erfasst die Erfassungseinrichtung (12) neben Tiefeninformationen gleichzeitig auch detaillierte Farbinformationen der Person (7) auf der Lauffläche (1), welche auf das 3D-Modell des Avatars übertragen werden. Dazu wird die Lauffläche (1) mit der darauf still stehenden Person (7) vor der Erfassungsvorrichtung (12) mittels der Führung (3) rotiert, ohne dass die Person (7) dabei translatorisch transportiert wird. Eine Kontrolle des Avatars findet derweil nicht statt.

Seitlicher Versatz der Person (7) wird von der erfindungsgemäßen Vorrichtung nicht direkt beeinflusst, da die Eingabevorrichtung keinen linearen Antrieb quer zur Längsmittellinie (6) aufweist. Läuft eine Person (7) auf der Lauffläche (1) parallel zur Längsmittellinie (6), bleibt deren lateraler Versatz unverändert. Läuft die Person (7) auf der Lauffläche (1) jedoch schräg zur Längsmittellinie (6), verändert sich der laterale Versatz. Der laterale Versatz wird somit verringert, indem man in geeigneter Weise einen Offset zur Winkelstellung der Führung (3) hinzufügt, so dass die Laufrichtung (8) der Person (7) stets schräg zur Längsmittellinie (6) hin weist, nämlich solange wie der laterale Versatz besteht. Die Höhe und das Vorzeichen des Offsets richten sich dabei nach der Lage und der Stärke des lateralen Versatzes. Steht die Fördereinrichtung (4) still, befinden sich die Drehpunkte von Führung (3) und Lauffläche (1) deckungsgleich im Zentrum der Führung (3). Befindet sich der Läufer seitlich davon, wird der Drehpunkt der Lauffläche (1), mittels einer Addition der Geschwindigkeitsvektoren der Rotation der Führung (3) und der Translation der Fördereinrichtung (4), um den Betrag des lateralen Versatzes, zur Position der Person (7) hin verschoben. Die Grundlage dafür bildet die Tatsache, dass die Addition der Geschwindigkeitsvektoren von Rotation und Translation in einer Ebene wieder eine Rotation mit gleicher Winkelgeschwindigkeit ergibt, jedoch mit einem orthogonal zur Translation verschobenen Drehpunkt. Steht eine Person (7) also seitlich versetzt auf der Lauffläche (1) und dreht sich dort, führt die Fördereinrichtung (4) zusätzlich zur Rotation der Führung (3) eine definierte Förderbewegung aus, wodurch sich der Drehpunkt der Lauffläche (1) dann, längs zur Längsmittellinie (6) betrachtet, senkrecht unter der Position der Person (7) befindet.

### Bezugszeichenliste

- 1: Lauffläche
- 2: Rollkörper
- 3: Führung
- 4: Fördereinrichtung
- 5: Drehachse (der Führung)
- 6: Längsmittellinie (der Fördereinrichtung)
- 7: Person
- 8: Laufrichtung
- 9: Linearsteuerpunkt
- 10: Lateralsteuerpunkt
- 11: Gelenkpunkt
- 12: Erfassungseinrichtung

## Patentansprüche

1. Eingabevorrichtung zur Kontrolle eines Avatars in einer rechnergenerierten Umgebung, mit einer Lauffläche (1), unter Verwendung **einer Erfassungseinrichtung (12) und** einer am Aufstellungsort angeordneten Fördereinrichtung (4), wobei an der Fördereinrichtung (4) eine Führung (3) angebracht ist und sich in der Führung (3) Rollkörper (2) befinden welche die Lauffläche (1) für eine Person (7) bilden und wenigstens ein Teil der Rollkörper (2) mit der Fördereinrichtung (4) wechselwirkt und die Führung (3) mit Rollkörpern (2) relativ zum Aufstellungsort, um eine zur Lauffläche (1) senkrechte Drehachse (5) rotierbar ist,
**dadurch gekennzeichnet,**
**dass die Erfassungseinrichtung (12) den Rotationswinkel der Person (7), um eine zur Lauffläche (1) im Wesentlichen senkrechte Achse, erfasst und dieser die Rotation der Führung (3) beeinflusst.**

2. Eingabevorrichtung nach Anspruch 1,
**dadurch gekennzeichnet,**
**dass** eine Erfassungseinrichtung (12) die Körperhaltung der Person (7) mittels Tiefeninformationen räumlich erfasst und diese in Gelenkpunkte (11), vorzugsweise der Schulter und des Beckens, jeweils rechts und links überführt werden und dadurch die Rotation der Person (7) zugänglich wird und die Positionen der Gelenkpunkte (11) mittels einer Winkelregelung die Rotation der Führung (3) beeinflussen.

3. Eingabevorrichtung nach einem der vorhergehenden Ansprüche,
**dadurch gekennzeichnet,**
**dass** die Eingabevorrichtung mit einer Drehpunktverlagerung ausgestattet ist, wobei der Rotationsmittelpunkt der Lauffläche (1) um die seitliche Abweichung der Person (7) von der Drehachse (5), längs zur Längsmittellinie (6) betrachtet, verschoben wird und sich der Rotationsmittelpunkt der Lauffläche (1) längs zur Längsmittellinie (6) betrachtet, somit stets senkrecht unter der Position der Person (7) befindet, wenn diese seitlich versetzt zur Drehachse (5) auf der Lauffläche steht und sich dort dreht.

4. Eingabevorrichtung nach einem der vorhergehenden Ansprüche,
**dadurch gekennzeichnet,**
**dass** eine Erfassungseinrichtung (12) die Farb- und Tiefeninformationen der auf der Lauffläche (1) befindlichen Person (7) allseitig erfasst, indem die Lauffläche (1) vorzugsweise zentrisch unter der Person (7) rotiert, und ohne die Person (7) dabei translatorisch zu transportieren, mittels den Tiefeninformationen der in Rotation versetzten Person (7) das 3D-Modell eines Avatars, vorzugsweise mit einem der Person (7) ähnlichen Körperbau, erzeugt und mit den zugehörigen Farbinformationen versehen wird, wobei einzelne Gelenkpunkte (11) der Person (7) den entsprechenden Gelenken des Avatars zugeordnet werden und sich dessen Glieder in der virtuellen Umgebung während der Kontrolle des Avatars so bewegen, wie diejenigen der Person (7) auf der Lauffläche (1).

5. Verfahren zur Steuerung einer Eingabevorrichtung zur Kontrolle eines Avatars in einer rechnergenerierten Umgebung, mit einer Lauffläche (1), unter Verwendung **einer Erfassungseinrichtung (12) und** einer am Aufstellungsort angeordneten Fördereinrichtung (4), wobei an der Fördereinrichtung (4) eine Führung (3) angebracht ist und sich in der Führung (3) Rollkörper (2) befinden welche die Lauffläche (1) für eine Person (7) bilden und wenigstens ein Teil der Rollkörper (2) mit der Fördereinrichtung (4) wechselwirkt und die Führung (3) mit Rollkörpern (2) relativ zum Aufstellungsort, um eine zur Lauffläche (1) senkrechte Drehachse (5) rotierbar ist,
**dadurch gekennzeichnet,**
**dass der Rotationswinkel der Person (7), um eine zur Lauffläche (1) im Wesentlichen senkrechte Achse, von der Erfassungseinrichtung (12) erfasst wird und dieser die Rotation der Führung (3) beeinflusst.**

6. Verfahren zur Steuerung einer Eingabevorrichtung nach Anspruch 5,
**dadurch gekennzeichnet,**
**dass** die Körperhaltung der Person (7) mittels Tiefeninformationen von einer Erfassungseinrichtung (12) räumlich erfasst und in Gelenkpunkte (11), vorzugsweise für Schulter und/oder Becken, jeweils rechts und links überführt wird und dadurch die Rotation der Person (7) zugänglich wird und die Positionen der Gelenkpunkte (11) die Rotation der Führung (3) mittels Winkelregelung beeinflussen.

7. Verfahren zur Steuerung einer Eingabevorrichtung nach Anspruch 5 oder 6,
**dadurch gekennzeichnet,**
**dass** aus den Gelenkpunkten (11), vorzugsweise denen für Schulter und Becken, jeweils rechts und links, durch Verbinden jeweils eines linken mit einem rechten gleichartigen Gelenkpunkt (11) man Geraden erhält und durch deren senkrechte Projektion auf die Lauffläche (1) Winkeldifferenzen zur Längsmittellinie (6) gebildet werden, welche dann als gewichtetes Mittel der Winkeldifferenzen die Rotation der Führung (3) mittels einer Winkelregelung beeinflussen, und das gewichtete Mittel der Winkeldifferenz stetig einem Sollwert von vorzugsweise 90° entspricht, und somit die Laufrichtung (8) der Person (7) stets parallel zur Längsmittellinie (6) ausgeregelt wird.

8. Verfahren zur Steuerung einer Eingabevorrichtung nach Ansprüchen 5 bis 7,
**dadurch gekennzeichnet,**
**dass** der Abstand des Lateralsteuerpunkts (10) von der Drehachse (5), längs zur Längsmittellinie (6) betrachtet, als skaliertes Produkt mit der Winkelgeschwindigkeit der Führung (3), der Transportbewegung der Fördereinrichtung (4) hinzugerechnet wird und der Rotationsmittelpunkt der Lauffläche (1) somit stets um die seitliche Abweichung des Lateralsteuerpunkts (10) von der Drehachse (5) verschoben ist und sich der Rotationsmittelpunkt der Lauffläche (1) längs zur Längsmittellinie (6) betrachtet, stets senkrecht unter der Position der Person (7) befindet, wenn diese seitlich versetzt zur Drehachse (5) auf der Lauffläche steht und sich dort dreht.

9. Verfahren zur Steuerung einer Eingabevorrichtung nach Ansprüchen 5 bis 8,
**dadurch gekennzeichnet,**
**dass** die Transportbewegung der Fördereinrichtung (4) nicht aktiv wird, solange sich die Gelenkpunkte (11) der Füße der Person (7) zueinander in relativer Ruhe und nah am Boden und/oder nah an der Drehachse (5) befinden.

10. Verfahren zur Steuerung einer Eingabevorrichtung nach Ansprüchen 5 bis 9,
**dadurch gekennzeichnet,**
**dass** die Kinematik der Person (7) mittels der Bewegung der Gelenkpunkte (11) ausgewertet und bekannten Bewegungsmustern zugeordnet wird und die Rotation der Führung (3) und die Transportbewegung der Fördereinrichtung (4) anhand des ermittelten Bewegungsmusters vorausschauend angesteuert werden.

11. Verfahren zur Steuerung einer Eingabevorrichtung nach Ansprüchen 5 bis 10,
**dadurch gekennzeichnet,**
**dass** die Farb- und Tiefeninformationen der auf der Lauffläche (1) stehenden Person (7) von einer Erfassungseinrichtung (12) allseitig erfasst werden, indem die Lauffläche (1) vorzugsweise zentrisch unter der Person (7) rotiert, ohne die Person (7) dabei translatorisch zu transportieren, und mittels der so gewonnenen Tiefeninformationen der in Rotation versetzten Person (7) das 3D-Modell eines Avatars, vorzugsweise mit einem der Person (7) ähnlichen Körperbau, erzeugt und mit den zugehörigen Farbinformationen versehen wird, wobei einzelne Gelenkpunkte (11) der Person (7) den entsprechenden Gelenken des Avatars zugeordnet werden und sich dessen Glieder in der virtuellen Umgebung während der Kontrolle des Avatars so bewegen, wie diejenigen der Person (7) auf der Lauffläche (1).

## Claims

1. An input device for controlling an avatar in a computer-generated environment, comprising a walkable surface (1), using a detection means (12) and a conveying device (4) located at the installation site, and a guide (3) attached to the conveying device (4) with rolling bodies (2) arranged in the guide (3) and the rolling bodies (2) providing the walkable surface (1) for a person (7) and at least some of the rolling bodies (2) interact with the conveying device (4) and the guide (3) with rolling bodies (2) is rotatable relative to the installation site about an axis of rotation (5) which is perpendicular to the walkable surface (1),
**characterized in that**
the detection means (12) detects the rotation of the person (7), about an axis perpendicular to the walkable surface (1), and this rotation influences the rotation of the guide (3).

2. An input device according to claim 1,
**characterized in that**
a detection means (12) acquires the spatial body posture of the person (7) by means of depth information to transform it into body joints (11), preferably the right and left shoulder and pelvis and thereby detects the rotation of the person (7), and the positions of the body joints (11) influence the rotation of the guide (3) by means of an angle control.

3. An input device according to one of the previous claims,
**characterized in that**
the input device is equipped with a pivot point displacement, wherein the rotational center of the walkable surface (1) is displaced about the lateral deviation of the person (7) from the axis of rotation (5), viewed along the longitudinal center line (6), and thus the center of rotation of the walkable surface (1), viewed along the longitudinal center line (6), is always located perpendicularly under the position of the person (7) when the latter is standing on the walkable surface, laterally offset to the axis of rotation (5), and rotates there.

4. An input device according to one of the previous claims,
**characterized in that**
a detection means (12) acquires on all sides the color information and depth information of the person (7) while rotating the walkable surface (1) preferably centrally under the person (7), which is standing on the walkable surface (1) and without conveying the person (7) in a translational manner, and by means of the depth information acquired from the person (7) which is set in rotation, a 3D model of an avatar is generated preferably with a body structure similar to the person (7) and associated with the acquired color information and the individual body joints (11) of the person (7) are assign to the corresponding joints of the avatar, so that during avatar control in the virtual environment the avatars limbs move synchronous to those of the person (7) on the walkable surface (1).

5. A method for controlling an input device for controlling an avatar in a computer-generated environment, comprising a walkable surface (1), using a detection means (12) and a conveying device (4) located at the installation site, and a guide (3) attached to the conveying device (4) with rolling bodies (2) arranged in the guide (3) and the rolling bodies (2) providing the walkable surface (1) for a person (7) and at least some of the rolling bodies (2) interact with the conveying device (4) and the guide (3) with rolling bodies (2) is rotatable relative to the installation site about an axis of rotation (5) which is perpendicular to the walkable surface (1),
**characterized in that**
the rotation of the person (7), about an axis perpendicular to the walkable surface (1) is detected by the detection means (12) and this rotation influences the rotation of the guide (3).

6. A method for controlling an input device according to claim 5,
**characterized in that**
the spatial body posture of the person (7) is acquired by means of depth information from a detection means (12) and is transformed into body joints (11), preferably for left and right shoulder and/or pelvis, and thereby the rotation of the person (7) is detect and the positions of the body joints (11), by means of an angle control, influences the rotation of the guide (3).

7. A method for controlling an input device according to claim 5 or 6,
**characterized in that**
the body joints (11) preferably for the left and right shoulder and pelvis, by connecting a left body joint (11) with a corresponding right one by means of a straight line, and by the perpendicular projection of this connection lines onto the walkable surface (1), angular differences relative to the longitudinal center line (6) are obtained, which then, as a weighted average of the angular differences influences the rotation of the guide (3) by means of an angle control, in such a way that the weighted average of the angular difference continuously corresponds to a desired value of preferably 90°, and thus the walking direction (8) of the person (7) is always adjusted parallel to the longitudinal center line (6).

8. A method for controlling an input device according to claims 5 to 7,
**characterized in that**
the distance between the lateral control point (10) and the axis of rotation (5), viewed along the longitudinal center line (6), as a scaled product with the angular velocity of the guide (3), is added to the transport movement of the conveying device (4), and thereby the rotational center point of the walkable surface (1) is displaced about the distance between the lateral control point (10) and the axis of rotation (5) and thus the center of rotation of the walkable surface (1), viewed along the longitudinal center line (6), is always located perpendicularly under the position of the person (7) when the latter is standing laterally offset to the axis of rotation (5) on the walkable surface, and rotates there.

9. A method for controlling an input device according to claims 5 to 8,
**characterized in that**
the transport movement of the conveying device (4) is not active as long as the body joints (11) of the feet of the person (7) are in rest relative to each other and close to the surface and/or close to the axis of rotation (5).

10. A method for controlling an input device according to claims 5 to 9,
**characterized in that**
the kinematics of the person (7) is analyzed by means of the movement of the body joints (11) and is assigned to known movement patterns, and the rotation of the guide (3) and the transport movement of the conveying device (4) is controlled in a predictive manner based on the determined movement pattern.

11. A method for controlling an input device according to claims 5 to 10,
**characterized in that**
the color information and depth information on all sides of the person (7) which is standing on the walkable surface (1) is acquired by means of a detection means (12) by rotating the walkable surface (1) preferably centrally under the person (7), and without conveying the person (7) in a translational manner, so that from the depth information of the person (7) which is set in rotation, a 3D model of an avatar, preferably with a body structure similar to the person (7), is generated and associated with the acquired color information and the individual body joints (11) of the person (7) are assign to the corresponding joints of the avatar, so that during avatar control in the virtual environment the avatars limbs move synchronous to those of the person (7) on the walkable surface (1).

## Revendications

1. Dispositif d'entrée pour le contrôle d'un avatar dans un environnement généré par ordinateur, avec une surface d'exercice (1), en utilisant une installation de saisie (12) et un transporteur (4) disposé à l'emplacement, un guide (3) étant fixé sur le transporteur (4) et des organes de roulement (2) se trouvant dans le guide (3), lesquels forment la surface d'exercice (1) pour une personne (7), et au moins une partie des organes de roulement (2) interagissant avec le transporteur (4), et le guide (3) pouvant pivoter relativement à l'emplacement, avec les organes de déplacement (2), sur un axe de rotation (5) vertical par rapport à la surface d'exercice (1),
**caractérisé en ce que**
l'installation de saisie (12) enregistre l'angle de rotation de la personne (7) sur un axe essentiellement vertical par rapport à la surface d'exercice (1), et cet angle influençant la rotation du guide (3).

2. Dispositif d'entrée selon la revendication 1,
**caractérisé en ce que**
une installation de saisie (12) saisit spatialement la posture de la personne (7) au moyen d'informations de profondeur, et **en ce que** celles-ci sont converties en points d'articulation (11), de préférence des épaules et du bassin, respectivement à gauche et à droite, et **en ce que**, par cela, la rotation de la personne (7) devient accessible, et **en ce que** les positions des points d'articulation (11) influencent la rotation du guide (3) au moyen d'un réglage angulaire.

3. Dispositif d'entrée selon l'une des revendications précédentes,
**caractérisé en ce que**
le dispositif d'entrée est équipé d'un décalage de point de rotation, le point central de rotation de la surface d'exercice (1) étant décalé de l'écart latéral de la personne (7) par rapport à l'axe de rotation (5), considéré longitudinalement à la ligne médiane longitudinale (6), et **en ce que** le point central de rotation de la surface d'exercice (1) considéré longitudinalement à la ligne médiane longitudinale (6) se trouve ainsi toujours verticalement sous la position de la personne (7), lorsque celle-ci se tient latéralement décalée par rapport à l'axe de rotation (5) sur la surface d'exercice et y pivote sur elle-même.

4. Dispositif d'entrée selon l'une des revendications précédentes,
**caractérisé en ce que**
une installation de saisie (12) saisit de tous les côtés les informations de couleur et de profondeur de la personne (7) se trouvant sur la surface d'exercice (1), la surface d'exercice (1) pivotant de préférence de façon centrée sous la personne (7), et sans en même temps transporter en translation la personne (7), génère le modèle 3D d'un avatar, de préférence avec une constitution physique semblable à celle de la personne (7), au moyen d'informations de profondeur de la personne mise en rotation (7), et est munie des informations de couleur correspondantes, des points d'articulation (11) individuels de la personne (7) étant attribués aux articulations correspondantes de l'avatar, et ses membres se déplaçant dans l'environnement virtuel pendant le contrôle de l'avatar comme ceux de la personne (7) sur la surface d'exercice (1).

5. Procédé pour la commande d'un dispositif d'entrée pour le contrôle d'un avatar dans un environnement généré par ordinateur, avec une surface d'exercice (1), en utilisant une installation de saisie (12) et un transporteur (4) disposé à l'emplacement, un guide (3) étant fixé sur le transporteur (4) et des organes de roulement (2) se trouvant dans le guide (3), lesquels forment la surface d'exercice (1) pour une personne (7), et au moins une partie des organes de roulement (2) interagissant avec le transporteur (4), et le guide (3) pouvant pivoter relativement à l'emplacement, avec les organes de roulement (2), sur un axe de rotation (5) vertical par rapport à la surface d'exercice (1),
**caractérisé en ce que**
l'angle de rotation de la personne (7) sur un axe essentiellement vertical par rapport à la surface d'exercice (1) est saisi par l'installation de saisie (12), et **en ce que** celui-ci influence la rotation du guide (3).

6. Procédé pour la commande d'un dispositif d'entrée selon la revendication 5,
**caractérisé en ce que**
la posture de la personne (7) est saisie spatialement par une installation de saisie (12) au moyen d'informations de profondeur et est convertie en points d'articulation (11), de préférence des épaules et/ou du bassin, respectivement à gauche et à droite et **en ce que**, par cela, la rotation de la personne (7) devient accessible, et **en ce que** les positions des points d'articulation (11) influencent la rotation du guide (3) au moyen d'un réglage angulaire.

7. Procédé pour la commande d'un dispositif d'entrée selon la revendication 5 ou 6,
**caractérisé en ce que**
on obtient des droites à partir des points d'articulation (11), de préférence des épaules et du bassin, respectivement à gauche et à droite, en reliant respectivement un point d'articulation (11) gauche avec un point d'articulation (11) droit semblable, et **en ce que** des différences angulaires par rapport à la ligne médiane longitudinale (6) sont formées par leur projection verticale sur la surface d'exercice (1), lesquelles, en tant que moyenne pondérée des différences angulaires, influencent ensuite la rotation du guide (3) au moyen d'un réglage angulaire, et **en ce que** la moyenne pondérée de la différence angulaire correspond toujours à une valeur de consigne de 90 °, de préférence, et **en ce que** la direction de déplacement (8) de la personne (7) est ainsi toujours réglée parallèlement à la ligne médiane longitudinale (6).

8. Procédé pour la commande d'un dispositif d'entrée selon les revendications 5 à 7,
**caractérisé en ce que**
la distance du point de commande latéral (10) de l'axe de rotation (5), considéré longitudinalement par rapport à la ligne médiane longitudinale (6), est prise en compte dans le calcul du mouvement de transport du transporteur (4) en tant que produit mis à l'échelle, avec la vitesse angulaire du guide (3), et **en ce que** le point central de rotation de la surface d'exercice (1) est ainsi toujours décalé de l'écart latéral du point de commande latéral (10) par rapport à l'axe de rotation (5), et **en ce que** le point central de rotation de la surface d'exercice (1), considéré longitudinalement à la ligne médiane longitudinale (6), se trouve toujours verticalement sous la position de la personne (7), lorsque celle-ci se tient latéralement décalée par rapport à l'axe de rotation (5) sur la surface d'exercice et y pivote sur elle-même.

9. Procédé pour la commande d'un dispositif d'entrée selon les revendications 5 à 8,
**caractérisé en ce que**
le mouvement de transport du transporteur (4) n'est pas actif tant que les points d'articulation (11) des pieds de la personne (7) se trouvent en repos relatif l'un par rapport à l'autre et proches du sol et/ou proches de l'axe de rotation (5).

10. Procédé pour la commande d'un dispositif d'entrée selon les revendications 5 à 9,
**caractérisé en ce que**
la cinématique de la personne (7) est analysée au moyen du mouvement des points d'articulation (11) et est attribuée à des modèles de mouvement connus, et **en ce que** la rotation du guide (3) et le mouvement de transport du transporteur (4) sont commandés de façon prévisionnelle à l'aide du modèle de mouvement établi.

11. Procédé pour la commande d'un dispositif d'entrée selon les revendications 5 à 10,
**caractérisé en ce que**
les informations de couleur et de profondeur de la personne (7) se tenant sur la surface d'exercice (1) sont saisies de tous les côtés par une installation de saisie (12), la surface d'exercice (1) pivotant de préférence de façon centrée sous la personne (7) sans en même temps transporter en translation la personne (7), et **en ce que** le modèle 3D d'un avatar, de préférence avec une constitution physique semblable à celle de la personne (7), est généré au moyen des informations de profondeur obtenues ainsi et muni des informations de couleur correspondantes, des points d'articulation (11) individuels de la personne (7) étant attribués aux articulations correspondantes de l'avatar et ses membres se déplaçant dans l'environnement virtuel pendant le contrôle de l'avatar comme ceux de la personne (7) sur la surface d'exercice (1).
